Europäisches Patentamt

European Patent Office

Office européen des brevets

(11) Veröffentlichungsnummer: **0 063 758**
A1

(12) **EUROPÄISCHE PATENTANMELDUNG**

(21) Anmeldenummer: **82103203.4**

(22) Anmeldetag: **16.04.82**

(51) Int. Cl.³: **B 05 D 5/00, C 09 D 3/36**

(30) Priorität: **28.04.81 DE 3116887**

(43) Veröffentlichungstag der Anmeldung: **03.11.82**
**Patentblatt 82/44**

(84) Benannte Vertragsstaaten: **BE DE FR GB**

(71) Anmelder: **BAYER AG, Zentralbereich Patente, Marken und Lizenzen, D-5090 Leverkusen 1, Bayerwerk (DE)**

(72) Erfinder: **Ippen, Jakob, Dr., Schleiermacherstrasse 17, D-5090 Leverkusen 1 (DE)**
Erfinder: **Boehnert, Joachim, Rheindorfer Strasse 63 c, D-5090 Leverkusen 1 (DE)**

(54) **Oberflächenschutz durch Auftragen von flüssigem Kautschuk.**

(57) Verfahren zum Schützen von Oberflächen durch Auftragen einer flüssigen Kautschukmischung, hergestellt mit flüssigem Kautschuk, die übliche Kautschukhilfsmittel enthält, mittels bekannter Spritzverfahren, dadurch gekennzeichnet, daß entweder die flüssige Kautschukmischung auf Temperaturen von 50 bis 120 °C erhitzt wird oder der flüssigen Kautschukmischung ein Lösungsmittel in Mengen bis 30 Gew.-Teilen zugegeben wird und diese anschließend auf die Oberfläche aufgetragen wird.

BAYER AKTIENGESELLSCHAFT     5090 Leverkusen, Bayerwerk

Zentralbereich
Patente, Marken und Lizenzen   E/ABc

Oberflächenschutz durch Auftragen von flüssigem Kautschuk

─────────────────────────────────────────────

Die Erfindung betrifft ein Verfahren zum Schützen von
Oberflächen durch Auftragen einer flüssigen Kautschukmischung mittels bekannter Spritzverfahren.

Üblicherweise werden Korrosionsschutz-Auskleidungen auf
Basis Kautschuk derart ausgeführt, daß man zunächst
eine Kautschukfolie herstellt und diese dann auf das
zu schützende Trägermaterial aufklebt. Das geschieht
in der Art und Weise, daß auf den rauhen und fettfreien
Untergrund ein Primer aufgetragen wird. Auf den Primer kommt eine Haftlösung, die ebenfalls auf die Gummifolie aufgetragen wird. Nach einer entsprechenden Abdunstzeit der in der Haftlösung enthaltenen Lösungsmittel wird die Folie Bahn für Bahn von Hand aufgeklebt.
Die Vulkanisation erfolgt im Autoklaven oder auch mittels
Ultrabeschleuniger drucklos bei Raumtemperatur. Für die
überschlägliche Kalkulation kann mit einer Leistung von
1 m$^2$ pro Mann und Stunde incl. der Vorbereitungsarbeiten bei Gruppeneinsatz gerechnet werden.

Vorteil des erfindungsgemäßen Verfahrens ist die kontinuierliche Applikation einer Korrosionsschutzschicht

Le A 20 964 - EP

gleicher Schichtstärke auf das Trägermaterial, bei dem die gleiche $m^2$-Leistung 4 mm stark, in nur ca. 15 min. erbracht werden kann. Dieses Korrosionsschutzmaterial besteht aus flüssigem Kautschuk, in den mittels eines 3-Walzen-Stuhles oder eines modifizierten Lösungskneters Füllstoff, z.B. Ruß, und Chemikalien eingearbeitet werden. Die dabei entstehende hochviskose Masse läßt sich mit einem Lösungsmittel bis zu guter Fließfähigkeit verdünnen oder alternativ zur Verbesserung der Fließfähigkeit mit einem Heizgerät anwärmen, da mit steigender Temperatur die Viskosität des Kautschuks stark abnimmt. Das Aufspritzen erfolgt mit einem handelsüblichen Air-less-Spritzgerät, wobei nur 1 Mann benötigt wird, der dabei keine körperlich anstrengende Tätigkeit, wie das Anrollen der Folien, zu verrichten hat.

Die vorher eingemischten Lösungsmittel verdampfen teilweise während der Flugphase des Materials und teilweise während der Vulkanisation. Mit einem Auftrag erreicht man Schichtdicken bis zu 1 mm. Nach einer vom Lösungsmittel abhängigen Abdunstzeit bzw. kürzeren Abkühlzeit kann der nächste Auftrag erfolgen, bis die gewünschte Schichtdicke erreicht ist. Das Material versteift kurz nach dem Auftragen auf den Untergrund und läßt sich deshalb auch gut senkrecht verarbeiten. Durch das erfindungsgemäße Verfahren gelingt es, auch kleine und kompliziert geformte Gegenstände zu beschichten. Die aufwendige Handarbeit des Folienverlegens wird überflüssig.

Gegenstand der Erfindung ist somit ein Verfahren zum

Le A 20 964

Schützen von Oberflächen durch Auftragen einer flüssigen Kautschukmischung, hergestellt mit flüssigem Kautschuk, die übliche Kautschukhilfsmittel enthält, mittels bekannter Spritzverfahren, das dadurch gekennzeichnet ist, daß entweder die flüssige Kautschukmischung auf Temperaturen von 50 bis 120°C erhitzt wird, um eine Viskosität bis 9000 MPa.s anzunehmen, oder 100 Gew. Tln der flüssigen Kautschukmischung ein Lösungsmittel in Mengen bis 30 Gew.-Teilen zugegeben wird, und diese anschließend auf die Oberfläche aufgetragen wird.

Die Viskosität der zu verarbeitenden Mischung ist insofern wichtig, als mit Erhöhung der Viskosität der zum Aufreißen zum Spritznebel notwendige Druck zunimmt und die Handhabung der Spritzpistole und der Apparaturen schwieriger wird. Bei starker Reduzierung der Viskosität läuft die angespritzte Masse an senkrechten Wänden wieder herunter unter Bildung von sogenannten Nasen und ungleicher Schichtstärke.

Die Auswahl der Lösungsmittel erfolgt nach Dampfpunkt, Löslichkeit in der Mischung und Verarbeitungsbedingungen.

Geeignet sind Kohlenwasserstoffe, Ester und Ketone.

Die flüssigen Kautschuken besitzen bevorzugt ein mittleres Molgewicht $M_n$ von 1000-8000.

Neben Kautschuk enthalten die verspritzbaren Mischungen u.a. Füllstoffe, wie Ruße, Aluminiumsilikate, Graphit,

Le A 20 964

Kieselsäuren, Quarzmehl, Talkum, Weichmacher wie Mineralöle und synthetische Weichmacher, Harze, wie Cumaronharz, Kolophonium, Fichtenholzteer, Vulkanisationsaktivatoren wie Schwefel, Magnesiumoxid, Zinkoxid, Bleimenninge, Bleiglätte, Vulkanisationsbeschleuniger und
Alterungsschutzmittel.

Der Einsatz der flüssigen Kautschukmischung erfolgt überall dort, wo auch bisher Gummierungen eingesetzt wurden, das sind z.B. in Lager- und Reaktionstanks, Straßen-
und Schienentankwagen, Behälter in Kläranlagen usw.
für saure und alkalische Chemikalien, Mineralöle.

- 5 -

## Beispiel 1

Die Gummimischung, bestehend aus 100 Gew.-Tln. eines flüssigen Polychloropren, 20 Gew.-Tln. Ruß, 20 Gew.-Tln. Bleimennige, 5 Gew.-Tln. Zinkoxid und 10 Gew.-Tln. Ethylacetat, wird von einem Behälter der für die Vulkanisation notwendige aminische Beschleuniger in flüssiger Form von einem anderen Behälter zum Mischkopf mit Hochdruckpumpen angeliefert. Die beiden Komponenten werden im Gewichtsverhältnis 10:1 mit einem motorisch angetriebenen Schnellmischer bei Raumtemperatur intensiv miteinander vermischt. An die Mischkammer wird eine Air-less-Spritzpistole direkt angeschlossen. Bei einem Druck vor der Spritzdüse von ca. 300 bar entsteht ein gleichmäßiger Sprühnebel, aus dem ein Teil des in der Gummimischung enthaltenen Ethylacetats entweicht. Nach wenigen Minuten tritt eine Verfestigung der Gummimischung ein, so daß auch an senkrechten Flächen mit einer Schichtdicke von ca. 0,7 - 1,0 mm gearbeitet werden kann. Nach ca. 1 Stunde, wenn möglich 1 Tag, damit die Lösungsmittelreate alle verdampfen können, kann die nächste Lage aufgebracht werden.

## Beispiel 2

Die Gummimischung wie unter 1) beschrieben, aber ohne Ethylacetat, wird auf 80°C erwärmt und so die Viskosität auf Spritzfähigkeit gesenkt. Der Vulkanisationsbeschleuniger wird ebenfalls, wie oben beschrieben, eingemischt. Der Arbeitsdruck beläuft sich auf ca. 600 bar. Nach Abkühlung auf der zu schützenden Oberfläche

Le A 20 964

kann die nächste Schicht mit einer Stärke von ca. 1 mm
aufgebracht werden.

Le A 20 964

Patentanspruch

Verfahren zum Schützen von Oberflächen durch Auftragen
einer flüssigen Kautschukmischung, hergestellt mit
flüssigem Kautschuk, die übliche Kautschukhilfsmittel
enthält, mittels bekannter Spritzverfahren, dadurch gekennzeichnet, daß entweder die flüssige Kautschukmischung
auf Temperaturen von 50 bis 120°C erhitzt wird,
oder der flüssigen Kautschukmischung ein Lösungsmittel
in Mengen bis 30 Gew.-Teilen zugegeben wird, und diese
anschließend auf die Oberfläche aufgetragen wird.

Le A 20 964

Europäisches Patentamt

**EUROPÄISCHER RECHERCHENBERICHT** 0063758 Nummer der Anmeldung

EP 82 10 3203

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | JAP. PAT. REP., Band 80, Nr. 47, 19. Dezember 1980, page 5, J8-G, section CH, Derwent Publ., London, G.B. & JP - B - 80 045 085 (ELECTRO-CHEMICAL IND KK) 15-11-1980 | 1 | B 05 D 5/00 C 09 D 3/36 |
| | --- | | |
| A | JOURNAL OF APPLIED CHEMISTRY ABSTRACTS, 1962, Teil ii, Juli 1962, Spalten 80-81, London, G.B. A.L. LABUTIN et al.: "Liquid chloroprene rubber - a new material for rubber coating" & SOVIET RUBB. TECHNOL. 1961, 20, no. 6, 6-9 | 1 | |
| | --- | | |
| A | JAP. PAT. REP., section CH, Band 80, Nr. 47, 19. Dezember 1980, Seite J8-G, p. 6, , Derwent Publ., London, G.B. & JP - B - 80 045 109 (MITSUBOSHI BELTING KK) 15-11-1980 * Abstract * | 1 | RECHERCHIERTE SACHGEBIETE (Int. Cl. 3) B 05 D C 09 D |
| | --- | | |
| A | EP-A-0 003 223 (VOLKSWAGENWERK AKT.) * Anspruch 1; Seite 1; Seite 8, Zeilen 19-29; Seite 9, Beispiel D,d * | 1 | |
| | ----- | | |

Der vorliegende Recherchenbericht wurde für alle Patentansprüche erstellt.

| Recherchenort DEN HAAG | Abschlußdatum der Recherche 23-07-1982 | Prüfer DE LA MORINERIE B.M. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03.82